# EUROPEAN PATENT APPLICATION

(11) **EP 4 686 735 A1**
(43) Date of publication of application: **04.02.2026**
(21) Application number: 25188384.9
(22) Date of filing: 09.07.2025
(51) Int. Cl.: C08K 5/098, C08K 5/00, C08L 27/24, C08K 3/22, C08K 3/34, C08K 5/57

(54) **HEAT STABILIZERS FOR CPVC**

(30) Priority: 29.07.2024 US 202418787149
(71) Applicant: Galata Chemicals, LLC, Jersey City, NJ 07311 (US)
(72) Inventor: FRENKEL, Peter, Danbury, CT 06811 (US); EVANS, Patrick, Barrie, L4N0Z1 (CA)
(74) Representative: Prinz & Partner mbB

(57) **Abstract**

A barium carboxylate-based heat stabilizer for CPVC compounds and the CPVC compounds containing these stabilizers is disclosed. The compounds containing these stabilizers exhibited extended decomposition time, enabled lower torques for the ease of processing and increased their impact resistance.

## Description

### FIELD OF THE INVENTION

The present invention relates to metal carboxylate heat stabilizer compositions for chlorinated polyvinyl chloride (CPVC) compositions having excellent thermal stability in molding and extruding pipes, fittings and sheets. More particularly, the present invention relates to high efficiency barium carboxylate-containing heat stabilizer compositions for CPVC compounds and the CPVC compounds containing those stabilizers.

### BACKGROUND AND PRIOR ART

References listing typical heat stabilizers for CPVC compounds include alkyltin mercaptides, zeolites, 6-amino-1,3-dimethyluracil, hydrotalcites, disodium sebacate and conventional mixed metal carboxylate combinations, such as calcium/zinc carboxylates and barium/zinc carboxylates. Use of the conventional zinc-containing mixed metal carboxylates as heat stabilizers (as opposed to co-stabilizers) is problematic in CPVC (as opposed to PVC) , due to its "zinc burning" effect (accelerated thermal degradation).

US 4,331,775, US 4,345,040 and US 4,374,205 disclose using disodium phosphate as an effective stabilizer for CPVC.

As noted in US 5,789,453 and US 7,423,081, alkyltin mercaptides are typically used as heat stabilizers for compounding CPVC resins into pipes and profiles.

US 5,582,873 discloses using zeolite acid scavenging stabilizers for CPVC. US 6,414,071 discloses the use of the zeolites in combination with calcium-zinc, barium-zinc or organotin co-stabilizers (see the comment above regarding the "zinc burning"), and EP2083044 covers the use of the zeolites as stabilizers for CPVC in combination with sodium perchlorate.

US 5,925,696 describes heat stabilizers for chlorine-containing polymers, comprising an uracil derivative, such as 6-amino-1,3-dimethyluracil, that is used in combination with a zeolite or a hydrotalcite, and where alkali or alkali earth compounds can optionally be used.

US 6,096,820 discloses using aluminosilicate zeolites as stabilizers for CPVC. The zeolites can be used in combination with co-stabilizers selected from the group consisting of salts of magnesium, antimony, cadmium, barium, tin, calcium, zinc and lead as well as organic components including esters, hindered amines, beta-diketones, epoxidized oils, phosphites and their mixtures. In general, co-stabilizers are considered as minor components of the stabilizers.

US 6,469,079 discloses lower tin-containing stabilizers for CPVC resin having 60-75% chlorine content. The stabilizer comprises 1-5 phr of an organotin stabilizer used in combination with 1.5-4.0 phr of a zeolite.

US 7,928,169 describes lower tin-containing heat stabilizers for CPVC comprising 1-2 parts per hundred parts (phr) of a tin stabilizer that is used in combination with 0.2-2.5 phr of an aluminosilicate zeolite and 1-2 phr of metal carboxylate co-stabilizers, including sales of Li, Na, K, Mg, Ca, Sr, Ba, Cd. Al, Sb, and C₈-C₁₈ organic acids and their combinations (mixed metal soaps, such as barium/cadmium, barium/cadmium/zinc, barium/zinc).

US 8,354,462 discloses heat stabilizers for chlorine-containing polymers, such as PVC and CPVC, consisting of a hydrotalcite coated with fatty acids and used in combinations with metal compounds, where the metals are Li, Na, K, Mg, Ca, Ba, Sr, Zn, Al, La, Ce, Sn and mixtures thereof.

US 10,167,376 discloses heat stabilizers for CPVC containing 0.1-3 phr of zeolite, and optionally a C₆-C₁₂ metal carboxylate or metal dicarboxylate, where the metals are Li, Na, K, Mg and Ca; for example, disodium sebacate. These stabilizers are of greater than 10% water content. US 4,656,209 and US 5,859,100 describe the use of aminouracil derivatives with the optional metal carboxylates as stabilizers for CPVC.

WO 2008/023249 discloses stabilizers for PVC comprising uracil and its derivatives, as well as zeolites and metal carboxylates.

US 10,202,500 discloses a heat stabilizer for CPVC comprising a) 1-3 phr zeolite, b) 0.1-3.0 phr C₆-C₁₂ metal carboxylate, such as disodium sebacate, and c) an uracil derivative, such as 6-amino-1,3-dimethyluracil.

US 11,396,589 discloses heat stabilizers for CPVC comprising coupled N-functionalized 6-amino-uracil derivatives that may optionally contain at least one of zeolites or C₆-C₁₂ metal carboxylates.

US 11,542,389 discloses thermoplastic additive compositions based on PVC and/or CPVC for 3D printing, and a stabilizer comprising tin compounds and mixed metal carboxylates, such as calcium-zinc carboxylates and calcium-organic systems, that typically contain the uracil derivatives and/or beta-diketones. Other metal carboxylates (carboxylates of alkali metals, alkaliearth metals, transition metals and their combinations) as well as zeolites may also be included.

KR100862029B1 discloses a plastic pipe composition comprising a PVC/CPVC blend stabilized by 3-10 parts by weight of either barium-zinc carboxylate type or calcium-zinc carboxylate type stabilizer system.

IN417811 describes a ternary heat stabilizer system for CPVC. The stabilizer comprises a) an antioxidant (such as hindered phenols, secondary aromatic amines, thioethers and organic sulfides), b) a nitrogen-containing substance (such as 4-mino-1,3-dimetyl uracil, triethanol amine, ureas, thioureas and dihydropyridines), and c) a perchlorate component (such as sodium perchlorate).

Practically all tin-free stabilizers for CPVC are fairly complex, multicomponent and perceived to be less hazardous, while alkytin mercaptides are the most effective stabilizers, having compositions that are relatively simple, and consist of one main component: dialkyltin bis(2-ethylhexyl thioglycolate), where the alkyl group is methyl, n-butyl or n-octyl. Co-stabilizers can be added as minor components with the alkyltin mercaptides to reduce their cost-in-use. Other known CPVC heat stabilizers containing antimony and lead are mentioned in [Chlorinated PVC - Applications and Stabilisation - An Overview about India. PVC 2024, Edinburgh, Scotland, p. 1949].

No high content barium-containing heat stabilizers are exemplified or even contemplated in the prior art. The search for simple and effective CPVC heat stabilizers of relatively low toxicity continues.

Thus, a need exists for improved solid heat stabilizers for CPVC.

### SUMMARY OF THE INVENTION

The subject matter of the present disclosure relates to heat stabilizer compositions for CPVC, a halogen-containing polymer.

In one embodiment, the present disclosure provides a process for stabilizing a chlorinated polyvinyl chloride resin comprising adding a CPVC stabilizer to the chlorinated polyvinyl chloride resin, wherein the CPVC stabilizer comprises a barium carboxylate-containing compound selected from neutral or overbased, liquid or solid barium salts of C₁-C₂₄ linear, branched, cyclic aliphatic or aromatic organic acids, barium alcoholates, or their solutions in solvents, in an amount of 30.0 to 100.0 wt% based on the total weight of the stabilizer, thereby forming a stabilized CPVC composition having a barium content, wherein the CPVC stabilizer is added in an amount of 1.0 to 10.0 parts per hundred parts of the chlorinated polyvinyl chloride resin. For the purposes of this specification, the term overbased salt means a salt that contains a stoichiometric excess of the metal over the carboxylate anion required to neutralize it.

In another embodiment, the present disclosure relates to a stabilized chlorinated polyvinyl chloride resin comprising the chlorinated polyvinyl chloride resin and a CPVC stabilizer comprising a barium carboxylate-containing compound selected from neutral or overbased liquid or solid barium salts of C₁-C₂₄ linear, branched, cyclic aliphatic or aromatic organic acids, barium alcoholates, or their solutions in solvents, in an amount of 30.0 to 100.0 wt% based on the total weight of the stabilizer, wherein the CPVC stabilizer is present in an amount of 1.0 to 10.0 parts by weight per hundred parts by weight of the CPVC resin. For the purposes of this specification, unless otherwise defined, phr refers to parts per 100 parts by weight.

In still another embodiment, the present disclosure relates to a process comprising extruding or injection-molding at least one stabilized chlorinated polyvinyl chloride compound, comprising the chlorinated polyvinyl chloride resin and a CPVC stabilizer comprising a barium carboxylate-containing compound selected from neutral or overbased liquid or solid barium salts of C₁-C₂₄ linear, branched, cyclic aliphatic or aromatic organic acids, barium alcoholates, or their solutions in solvents, in an amount of 30.0 to 100.0 wt% based on the total weight of the stabilizer, wherein the CPVC stabilizer is present in an amount of 1.0 to 10.0 parts by weight per hundred parts by weight of the CPVC resin, thereby forming an article.

In another embodiment, the present disclosure relates to a CPVC stabilizer comprising 30 to 100, preferably 50 to 90 wt.% of a barium carboxylate-containing compound selected from neutral or overbased liquid or solid barium salts of C₁-C₂₄ linear, branched, cyclic aliphatic or aromatic organic acids, barium alcoholates, or their solutions in solvents; and 0 to 70.0, preferably, 10.0 to 50.0 wt.% of a co-stabilizer based on the total weight of the composition, the co-stabilizer being selected from calcium carboxylates, metal silicates, zinc carboxylates, zeolites, alkyltin mercaptides, 6-amino-1,3-dimethyluracil, disodium sebacate, epoxidized oleochemicals, antioxidants, perchlorates or mixtures thereof.

### DETAILED DESCRIPTION OF THE INVENTION

### CPVC resin

The CPVC resin of the present subject matter can be prepared by chlorinating PVC. CPVC resins possess a straight and/or branched carbon chain backbone having hydrogen and chlorine covalently bonded with it. Each carbon atom of the chlorinated polyvinyl chloride resin is bonded with 0 to 2 chlorine atoms. Preferred CPVC resins include CPVC having a weight percent of chlorine ranging from about 55 to about 75%, more preferably from about 64 to about 67%. Such CPVC resins are commercially available. The CPVC resins are typically melt blended with CPVC additives.

### Heat Stabilizers

It was surprisingly found that high content barium-containing compounds function as very effective stabilizers for CPVC. The suitable barium-containing compounds are selected from neutral or overbased liquid or solid barium salts of C₁-C₂₄ linear, branched, cyclic aliphatic or aromatic organic acids, barium alcoholates, their solutions in solvents, such as organic acids, esters, alcohols, ketones and mixtures thereof. Preferably, the barium-containing compound is selected from barium stearate, barium oleate, barium ricinoleate, barium palmitate, barium laurate, barium neodecanoate, barium benzoate, barium 2-ethylhexanoate, overbased barium oleate, overbased barium 2-ethylhexanoate, or mixtures thereof, as shown in "Metal Carboxylates"; Mehrota, Ram C., et al., Academic Press, 1983. Peterangelo, S.C; Hart, R. T.; Clark, A. C. J. Phys. Chem B 2007, 111, pp. 7073-7077. More preferably, the barium-containing compound is selected from the group consisting of barium 2-ethylhexanoate, barium oleate, overbased barium oleate, barium laurate and barium stearate. Barium stearate and barium laurate are most preferred for use in solid heat stabilizers for CPVC.

The CPVC stabilizers of the present subject matter contain 30-100 wt% of a barium compound, preferably 50-90 wt% of the barium compound described above. The amount of a barium compound present in the CPVC is about 1-10 parts per 100 parts of CPVC resin (abbreviated as "phr"), preferably 1-5 phr, more preferably, 2-4 phr. It corresponds to the target barium content in CPVC compounds of about 0.1-2.0%, preferably 0.3-1.0% barium, based on the total weight of the composition.

In contrast to alkyltin mercaptides, the barium carboxylate-based heat stabilizers intended for use in processing of CPVC compounds of this invention preferably do not exhibit acute toxicity (dermal), serious eye damage/eye irritation, skin sensitization, germ cell mutagenicity, specific organ toxicity, acute aquatic toxicity and chronic aquatic toxicity.

### Co-stabilizers

Co-stabilizers that may be used in combination with the high content barium-containing heat stabilizers include calcium carboxylates (such as calcium stearate), metal silicates (such as calcium silicate), zinc carboxylates (such as zinc stearate), zeolites, alkyltin mercaptides, 6-amino-1,3-dimethyluracil, disodium sebacate, epoxidized oleochemicals (such as epoxidized oils and epoxidized fatty acid esters) and antioxidants (such as hindered phenols), perchlorates, such as sodium perchlorate, or mixtures thereof. Calcium stearate, calcium silicate, zinc stearate, 6-amino-1,3-dimethyluracil, zeolites or mixtures thereof are preferred. The amount of each co-stabilizer used in combination with the barium-containing component should not exceed 15%. The total amount of all the co-stabilizers in the barium-containing stabilizer for CPVC is 1-50%, more preferably 10-30% based on the total weight of the stabilizer.

### Zeolite Co-stabilizers

Zeolite co-stabilizers suitable for use in CPVC if applied in combination with high content barium containing heat stabilizers of this invention are preferably described by the general formula: M_{x/n}[(AlO₂)ₓ(SiO₂)_{y}]_{w}H₂O, wherein n is the charge of the cation M, M is an element from the first or second main groups of the Periodic Table, such as Li, Na, K, Mg, Ca, Sr or Ba; y and x are numbers that range from 0.8 to 15, preferably from 0.8 to 1.2; and w is a number from 0 to 300, preferably from 0.5 to 30. Examples of zeolites include sodium aluminosilicates of the following types: zeolite A, zeolite Y, zeolite X, zeolite LSX; or the zeolites prepared by complete or partial replacement of the Na atoms by Li, K, Mg, Ca, Sr or Zn atoms. The preferred Si/Al ratio of the zeolite is about 1:1. Preferred zeolites are Na zeolite A and Na zeolite P.

### Metal Silicate Co-stabilizers

The heat stabilizer composition of the present subject matter may include metal silicates as co-stabilizers. Metals in the metal silicates are alkaline-earth metals (such as Mg, Ca, or Ba) or aluminum. Preferably, the metal silicate is calcium silicate. A suitable calcium silicate material may contain up to 15% moisture, have surface area of >100 m²/g, bulk density of 6-10 lb/ft³ and an average particle size of 4-8 microns (measured via Horiba LA 300 laser diffraction method).

### Other Additives

In addition to co-stabilizers, other additives that can typically be used in CPVC compounds stabilized with the barium-containing heat stabilizers of this invention include 1.0-2.0 phr lubricants, 5-10 phr impact modifiers, and 0.5-3.0 phr titanium dioxide (a UV absorber) and 0.01-1.0 phr colorants.

The stabilizers of this invention may sometimes increase the fusion time of the CPVC compounds compared to the conventional stabilizers, including alkyltin mercaptides. For the purposes of this specification, fusion time means the time under the process conditions needed to transform CPVC dry blend containing all the additives from its original powdery state into a melt. If necessary, the fusion time of the CPVC compounds stabilized with the high barium-containing heat stabilizers can be shortened by reducing the amount of the external lubricants, such as paraffine wax, from about 1.0 to about 0.5 phr.

### Stabilized CPVC Compounds

The stabilized chlorinated polyvinyl chloride compounds produced according to the present subject matter comprise a chlorinated polyvinyl chloride resin and a CPVC stabilizer comprising a barium carboxylate-containing compound selected from neutral or overbased liquid or solid barium salts of C₁-C₂₄ linear, branched, cyclic aliphatic or aromatic organic acids, barium alcoholates, or their solutions in solvents in an amount of 30.0 to 100.0 wt% based on the total weight of the stabilizer, wherein the CPVC stabilizer is present in an amount of 1.0 to 10.0 parts per hundred parts of the CPVC resin. The stabilized chlorinated polyvinyl chloride compound of this invention has a barium content of 0.1 to 2.0 wt.% based on the total weight of the composition. The stabilized chlorinated polyvinyl chloride resin has a drop dart impact resistance measured Normalized Minimum Free Energy of > 4 in Ibs/mil according to ASTM D4226. The stabilized chlorinated polyvinyl chloride resin has a decomposition time of > 12 min as measured according to ASTM D2538.

The CPVC resins, the heat stabilizers and other additives may preferably be combined via dry blending followed by compounding steps, such as molding (injection molding and compression molding), extrusion, paste forming or directly by compounding steps, such as molding (injection molding and compression molding) or extrusion. Preferably, the CPVC with heat stabilizers and other additives can be fabricated into semi-finished goods and articles, including sheets, profiles, pipes or fittings. Such articles can be produced via molding or extrusion.

The following Examples further detail and explain preparation of the inventive high barium-containing heat stabilizers, and demonstrate their efficacy as means for processing and preventing discoloration (caused by high shear and exposure to heat) of CPVC. These examples merely illustrate the invention. Those skilled in the art will recognize many variations that are within the spirit of the invention and scope of the claims.

### Examples

The composition of CPVC compounds used for the evaluation of the high barium-containing heat stabilizers of this invention are shown in Table 1.

**Table 1. Compositions of tested CPVC compounds**

| Component | Loading, phr |
|---|---|
| CPVC H829F (67% CI), commercially available from Kaneka Corporation | 100.0 |
| Lubricants | 1.9 |
| Impact Modifier | 5.0 |
| Titanium dioxide | 1.0 |
| Stabilizer* | 1.5, 3.0 |

| | |
|---|---|
| *The alkyltin mercaptide [Dibutyltin bis(2-ethylhexyl thioglycolate)] manufactured and marketed by Galata Chemicals, LLC as Mark 292 was used as a control stabilizer that was added at 1.5 phr. The barium-containing stabilizers of this invention described in Table 2 were added at 3 phr. | |

**Table 2. Composition of the tested barium-containing heat stabilizer**

| Component | Stabilizer 1 | Stabilizer 2 |
|---|---|---|
| | Weight % | Weight % |
| Barium Stearate | 82 | 69 |
| Zinc Stearate | 11 | 9 |
| Calcium Stearate | 4 | 3 |
| Metal Silicate | -- | 17 |
| Antioxidant | 3 | 2 |

### Example 1

### Rheology of CPVC compounds

Rheological profiles of CPVC compounds stabilized with the Control stabilizer and Stabilizer 1 of this invention were measured on a Brabender torque rheometer according to ASTM D2538 (65g sample at 165°C and 40 rpm). The results are shown in Table 3.

**Table 3. Rheological characteristics of the CPVC compounds**

| Stabilizers Used in Tested CPVC Compounds | Minimum Torque (mg) | Fusion Torque (mg) | Equilibrium Torque (mg) |
|---|---|---|---|
| Tin Stabilizer (control) | 4200 | 5300 | 3700 |
| Barium-containing stabilizer (Stabilizer 1) | 2200 | 3800 | 3300 |

The lower the torque imparted by a compound, the easier the processability of that compound. As can be seen from Table 3, compared with the tin stabilizer (control), the barium-containing heat Stabilizer 1 of this invention resulted in substantially reduced minimum torque (2200 vs. 4200 mg) and fusion torque (3800 vs. 5300 mg) of the compound containing this stabilizer, demonstrating ease of its processing. Equilibrium torque imparted by both stabilizers was more comparable. However, the barium-containing stabilizer imparted lower equilibrium torque still (3300 vs. 3700mg). In CPVC processing, minimum torque is achieved when the dry blend begins to transition from powder to melt; fusion torque is a torque value required to process the CPVC at fusion. After fusion, the CPVC melt equilibrates and reaches a steady state (with no significant variations), and the torque value at that point is called the equilibrium torque

### Example 2

### Decomposition Time of CPVC Compounds

The stabilized CPVC compounds were tested and compared based on the imparted decomposition time on 65g samples at 165°C and 40 rpm according to ASTM D2538. The decomposition time serves as a measure of thermal stability of compounds. The longer the decomposition time, the more thermally stable the compound is. Results of measuring the decomposition time of the CPVC compounds are in Table 4.

**Table 4. Decomposition time of CPVC compounds**

| Stabilizers Used in Tested CPVC Compounds | Decomposition Time, Minutes : Seconds |
|---|---|
| Tin stabilizer (control) | 12:00 |
| Barium-containing stabilizer (Stabilizer 1) | 13:30 |

According to the results of Table 4, the barium-containing heat Stabilizer 1 of this invention substantially extended the decomposition time of the CPVC compound by 12% up to 13 min. 30 sec. That is well beyond the 12 min. decomposition time imparted by the alkyltin mercaptide Control stabilizer. The obtained result demonstrated increased heat stability of the CPVC compound stabilized by the heat stabilizer of this invention compared to the highly efficient tin stabilizer Control.

### Example 3

### Drop Dart Impact Resistance

The CPVC compounds of the present subject matter were also tested for drop dart impact resistance in order to assess their brittleness and mechanical integrity according to ASTM D4226 test method. The results of the impact resistance testing are in Table 5.

**Table 5. Drop dart impact of the tested CPVC compounds**

| Stabilizers Used in tested CPVC Compounds | Normalized MFE (in·lbs/mil) |
|---|---|
| Tin stabilizer (control) | 4.09 |
| Barium-containing stabilizer (Stabilizer 2) | 4.76 |

| | |
|---|---|
| Note: MFE is Minimum Free Energy. | |

Results of Table 5 demonstrate that the barium-containing Stabilizer 2 of this invention increased the drop dart impact resistance that is associated with reduced brittleness of the CPVC compound by 16% compared to the tin heat stabilizer Control.

## Claims

1. A process for stabilizing a chlorinated polyvinyl chloride resin comprising:
- adding a CPVC stabilizer to the chlorinated polyvinyl chloride resin, wherein the CPVC stabilizer comprises a barium carboxylate-containing compound selected from neutral or overbased liquid or solid barium salts of C₁-C₂₄ linear, branched, cyclic aliphatic or aromatic organic acids, barium alcoholates, or their solutions in solvents, in an amount of 30.0 to 100.0 wt% based on the total weight of the stabilizer, thereby forming a stabilized CPVC composition having a barium content,
wherein the CPVC stabilizer is added in an amount of 1.0 to 10.0 parts per hundred parts of the chlorinated polyvinyl chloride resin.

2. The process of claim 1 wherein the CPVC stabilizer is added in the amount of 1.0 to 5.0 parts per hundred parts of the chlorinated polyvinyl chloride resin.

3. The process of claim 1 wherein the barium carboxylate-containing compound is present in the CPVC stabilizer in the amount of 50.0 to 90.0 wt.% based on the total weight of the stabilized composition, or wherein the barium content of the stabilized CPVC composition is 0.1 to 2.0 wt.%, preferably 0.3 to 1.0 wt%., based on the total weight of the composition.

4. The process of claim 1 wherein the barium carboxylate-containing compound is selected from barium stearate, barium oleate, barium ricinoleate, barium palmitate, barium laurate, barium neodecanoate, barium benzoate, barium 2-ethylhexanoate, overbased barium oleate, overbased barium 2-ethylhexanoate, or mixtures thereof, preferably wherein the barium carboxylate-containing compound is selected from barium 2-ethylhexanoate, barium oleate, overbased barium oleate, barium laurate, barium stearate or mixtures thereof, more preferably wherein the barium carboxylate-containing compound is selected from barium stearate, barium laurate or mixtures thereof.

5. The process of claim 1 wherein the chlorinated polyvinyl chloride resin comprises a straight and/or branched carbon chain backbone having hydrogen and chlorine atoms covalently bonded with it, especially wherein each carbon atom of the chlorinated polyvinyl chloride resin is bonded with 0 to 2 chlorine atoms.

6. The process of claim 5 wherein the chlorinated polyvinyl chloride resin has a weight percent of chlorine ranging from 55.0 to 75.0 wt%, more preferably from 64.0 to 67.0 wt.%, based on the total weight of the chlorinated polyvinyl chloride resin.

7. The process of claim 1 wherein the CPVC stabilizer further comprises a co-stabilizer in an amount of 1.0 to 50.0 wt.% based on the total weight of the stabilizer, the co-stabilizer being selected from calcium carboxylates, metal silicates, zinc carboxylates, zeolites, alkyltin mercaptides, 6-amino-1,3-dimethyluracil, disodium sebacate, epoxidized oleochemicals, antioxidants, perchlorates or mixtures thereof, the co-stabilizer preferably being selected from calcium stearate, calcium silicate, zinc stearate, 6-amino-1,3-dimethyluracil, zeolites or mixtures thereof.

8. The process of claim 7 wherein a maximum level of each co-stabilizer is 15.0 wt% based on the total weight of the stabilizer or wherein the co-stabilizer is present in an amount from 10.0 to 30.0 wt.% based on the total weight of the stabilizer.

9. The process of claim 7 wherein the chlorinated polyvinyl chloride resin further comprises an additive selected from lubricants, impact modifiers, UV absorbers, colorants or mixtures thereof, in particular wherein the lubricant is present in an amount from 1.0 to 2.0 parts per hundred parts of the chlorinated polyvinyl chloride resin, the impact modifier is present in an amount from 5.0 to 10.0 parts per hundred parts of the chlorinated polyvinyl chloride resin and/or wherein the UV absorber is present in an amount from 0.5 to 3.0 parts per hundred parts of the chlorinated polyvinyl chloride resin.

10. The process of claim 9 wherein the UV absorber is titanium dioxide.

11. A stabilized chlorinated polyvinyl chloride compound comprising the chlorinated polyvinyl chloride resin and a CPVC stabilizer comprising a barium carboxylate-containing compound selected from neutral or overbased liquid or solid barium salts of C₁-C₂₄ linear, branched, cyclic aliphatic or aromatic organic acids, barium alcoholates, or their solutions in solvents in an amount of 30.0 to 100.0 wt% based on the total weight of the stabilizer, wherein the CPVC stabilizer is present in an amount of 1.0 to 10.0 parts per hundred parts of the CPVC resin.

12. The stabilized chlorinated polyvinyl chloride resin of claim 11 wherein the barium content is 0.1 to 2.0 wt.% based on the total weight of the composition.

13. The stabilized chlorinated polyvinyl chloride resin of claim 11 having a drop dart impact resistance measured Normalized Minimum Free Energy of > 4 in Ibs/mil according to ASTM D4226 or having a decomposition time of > 12 min as measured according to ASTM D2538.

14. A process comprising extruding or injection-molding of at least one stabilized chlorinated polyvinyl chloride compound of claim 11, thereby forming an extruded or molded article, preferably wherein the extruded or molded article is pipes, fittings or sheets.

15. A CPVC stabilizer comprising:
- 50.0 to 90.0 wt.% of a barium carboxylate-containing compound selected from neutral or overbased liquid or solid barium salts of C₁-C₂₄ linear, branched, cyclic aliphatic or aromatic organic acids, barium alcoholates, or their solutions in solvents; and
- 10.0 to 50.0 wt.% of a co-stabilizer based on the total weight of the composition, the co-stabilizer being selected from calcium carboxylates, metal silicates, zinc carboxylates, zeolites, alkyltin mercaptides, 6-amino-1,3-dimethyluracil, disodium sebacate, epoxidized oleochemicals, antioxidants, perchlorates or mixtures thereof.
